(19) **Europäisches Patentamt / European Patent Office / Office européen des brevets**

(11) **EP 4 682 103 A1**

(12) **EUROPEAN PATENT APPLICATION**
published in accordance with Art. 153(4) EPC

(43) Date of publication:
**21.01.2026 Bulletin 2026/04**

(21) Application number: **24770943.9**

(22) Date of filing: **13.03.2024**

(51) International Patent Classification (IPC):
*C01B 32/21* (2017.01)    *H01M 4/133* (2010.01)
*H01M 4/587* (2010.01)    *H01M 4/1393* (2010.01)

(52) Cooperative Patent Classification (CPC):
**C01B 32/21; H01M 4/133; H01M 4/1393;**
**H01M 4/587;** Y02E 60/10

(86) International application number:
**PCT/JP2024/009862**

(87) International publication number:
**WO 2024/190839 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2023 JP 2023038965**

(71) Applicant: **Mitsubishi Chemical Corporation Tokyo 100-8251 (JP)**

(72) Inventors:
• **FUJII, Masanori**
  **Tokyo 100-8251 (JP)**
• **YOSHIDA, Hiroaki**
  **Tokyo 100-8251 (JP)**
• **ISHIWATARI, Nobuyuki**
  **Tokyo 100-8251 (JP)**
• **YOKOMIZO, Masakazu**
  **Tokyo 100-8251 (JP)**

(74) Representative: **Vossius & Partner Patentanwälte Rechtsanwälte mbB Siebertstrasse 3 81675 München (DE)**

(54) **CARBON MATERIAL, NEGATIVE ELECTRODE, SECONDARY BATTERY, AND METHODS FOR PRODUCTION THEREOF**

(57) The present invention relates to a carbon material having a volume-based average particle size $d_{50}$ of 9 $\mu$m or less, a true density of 2.25 g/cm$^3$ or less, and a Raman R value of 0.50 or less, the Raman R value being represented by the equation: {(intensity $I_B$ of peak $P_H$ near 1360 cm$^{-1}$ in Raman spectrum analysis)/(intensity $I_A$ of peak $P_A$ near 1580 cm$^{-1}$ in Raman spectrum analysis)}.

**EP 4 682 103 A1**

**Description**

Technical Field

The present invention relates to a carbon material, a negative electrode, a secondary battery, and methods for producing the carbon material, the negative electrode, and the secondary battery.

Background Art

In recent years, with an advance in miniaturization of electronic devices, demands for high-capacity secondary batteries have increased significantly. In particular, secondary batteries, particularly lithium-ion secondary batteries, have a high energy density and superior charge-discharge characteristics as compared with nickel-cadmium batteries or nickel-hydrogen batteries, and these batteries have gained attention.

The lithium-ion secondary batteries that have been developed and put to practical use include a non-aqueous lithium secondary battery including a positive electrode and a negative electrode capable of storing and releasing lithium ions, and a non-aqueous electrolytic liquid in which a lithium salt such as $LiPF_6$ or $LiBF_4$ is dissolved.

In the related art, extensive studies have been conducted for improving the performance of lithium-ion secondary batteries. In recent years, demands for a further improvement in the performance of lithium-ion secondary batteries have increased.

For example, Patent Literature 1 discloses a carbon material having a multilayer structure in which the surfaces of graphitic particles are coated with amorphous carbon, the carbon material satisfying specific physical properties. This makes it possible to achieve a high capacity and good charge-discharge load characteristics.

Citation List

Patent Literature

Patent Literature 1: JP 2012-74297 A

Summary of Invention

Technical Problem

However, it has been found that when a firing temperature is lowered to obtain the carbon material as described in Patent Literature 1, irreversible capacity increases when the obtained carbon material is used as a negative electrode active material of a secondary battery, and that improvements in initial efficiency and long-term storage recovery rate are desired.

Accordingly, an object of the present invention is to provide a carbon material having excellent initial efficiency and long-term storage recovery rate without increasing irreversible capacity when used as a negative electrode active material, and a method for producing the carbon material.

Another object of the present invention is to provide a negative electrode containing the carbon material, a method for producing the negative electrode, a secondary battery, and a method for producing the secondary battery.

Solution to Problem

As a result of intensive studies to solve the above problems, the present inventors have found that when the volume-based average particle size, true density, and Raman R value of a carbon material are set to specific ranges, the carbon material can be excellent in initial efficiency and long-term storage recovery rate without increasing the irreversible capacity when used as a negative electrode active material, and have completed the present invention.

Specifically, the gist of the present invention is as follows.

Aspect 1 of the present invention is a carbon material having a volume-based average particle size $d_{50}$ of 9 $\mu$m or less, a true density of 2.25 $g/cm^3$ or less, and a Raman R value of 0.50 or less, the Raman R value being represented by an equation described below.

Raman R value = (intensity IB of peak PB near 1360 cm-1 in Raman spectrum analysis)/(intensity $I_A$ of peak $P_A$ near 1580 $cm^{-1}$ in Raman spectrum analysis)

Aspect 2 of the present invention is the carbon material according to Aspect 1, wherein the volume-based average particle size $d_{50}$ is 5 $\mu$m or more.

Aspect 3 of the present invention is the carbon material according to Aspect 1 or 2, wherein the carbon material has a volume-based particle size $d_{90}$ of 15 $\mu$m or less, the volume-based particle size $d_{90}$ corresponding to cumulative 90% from a small particle side.

Aspect 4 of the present invention is the carbon material according to any one of Aspects 1 to 3, wherein the carbon material has a volume-based particle size $d_{10}$ of 6 $\mu$m or less, the volume-based particle size $d_{10}$ corresponding to cumulative 10% from a small particle side.

Aspect 5 of the present invention is the carbon material according to any one of Aspects 1 to 4, wherein the Raman R value is 0.20 or more.

Aspect 6 of the present invention is the carbon material according to any one of Aspects 1 to 5, wherein the carbon material contains an amorphous carbonaceous substance, and a ratio of a content (mass%) of the amorphous carbonaceous substance in the carbon material to the volume-based average particle size $d_{50}$ ($\mu$m) is 0.5 or more and 2.0 or less.

Aspect 7 of the present invention is the carbon material according to any one of Aspects 1 to 6, wherein the carbon material has a DBP oil absorption amount of 47 mL/100 g or less.

Aspect 8 of the present invention is the carbon material according to any one of Aspects 1 to 7, wherein the carbon material has a total pore volume of 0.58 mL/g or less.

Aspect 9 of the present invention is the carbon material according to any one of Aspects 1 to 8, wherein the carbon material has a cumulative pore volume of pores of 3000 nm or less of 0.3 mL/g or more.

Aspect 10 of the present invention is the carbon material according to any one of Aspects 1 to 9, wherein the carbon material has a cumulative pore volume of pores of 1000 nm or less of 0.1 mL/g or more.

Aspect 11 of the present invention is the carbon material according to any one of Aspects 1 to 10, wherein the carbon material has a cumulative pore volume of pores of from 10 nm to 50 nm of 0.01 mL/g or less.

Aspect 12 of the present invention is a negative electrode containing the carbon material described in any one of Aspects 1 to 11.

Aspect 13 of the present invention is a non-aqueous secondary battery including a positive electrode and a negative electrode, the electrodes being capable of storing and releasing lithium ions, and an electrolyte, wherein the negative electrode contains the carbon material described in any one of Aspects 1 to 11.

Aspect 14 of the present invention is a method for producing a carbon material, the method including:

mixing natural graphite having a volume-based average particle size $d_{50}$ of 9 $\mu$m or less and an amorphous carbonaceous substance precursor; and
heating the mixture until a Raman R value represented by an equation described below reaches 0.50 or less, to produce a carbon material having a content of an amorphous carbonaceous substance in the carbon material of from 4 mass% to 15 mass%.

Raman R value = (intensity $I_B$ of peak $P_H$ near 1360 cm$^{-1}$ in Raman spectrum analysis)/(intensity $I_A$ of peak $P_A$ near 1580 cm$^{-1}$ in Raman spectrum analysis)

Aspect 15 of the present invention is the method for producing a carbon material according to Aspect 14, wherein a temperature of the heating is 1200°C or higher.

Aspect 16 of the present invention is the method for producing a carbon material according to Aspect 14 or 15, wherein, after the carbon material is heated, the produced carbon material is disintegrated and classified.

Aspect 17 of the present invention is a method for producing a negative electrode, the method including applying the carbon material described in any one of Aspects 1 to 11 onto a current collector.

Aspect 18 of the present invention is a method for producing a secondary battery including a positive electrode, a negative electrode, and an electrolyte, wherein the negative electrode is produced by the method described in Aspect 17.

Advantageous Effects of Invention

The carbon material according to the present invention can be used as a negative electrode active material for a secondary battery having excellent initial efficiency and long-term storage recovery rate without increasing the irreversible capacity. Also, the method for producing a carbon material according to the present invention can provide the excellent carbon material as described above.

Furthermore, the negative electrode and the secondary battery according to the present invention contain the excellent carbon material as described above as a negative electrode active material, and such excellent negative electrode and secondary battery can be produced by the method for producing a negative electrode and the method for producing a secondary battery according to the present embodiment.

Description of Embodiments

Hereinafter, the present invention will be described in detail, but the present invention is not limited to the following embodiments and can be carried out with various modifications within the scope of the gist thereof. In the present specification, a numerical range expressed by using the term "to" means that the numerical values or physical property values before and after "to" are included in the numerical range. Further, "mass%" and "wt.%" are synonymous with each other, and "ppm by mass" and "ppm by weight" are synonymous with each other.

Carbon Material

The carbon material according to the present embodiment has a volume-based average particle size $d_{50}$ of 9 μm or less, a true density of 2.25 g/cm$^3$ or less, and a Raman R value of 0.50 or less, the Raman R value being represented by the following equation.

Raman R value = (intensity $I_B$ of peak $P_H$ near 1360 cm$^{-1}$ in Raman spectrum analysis)/(intensity $I_A$ of peak $P_A$ near 1580 cm$^{-1}$ in Raman spectrum analysis)

The volume-based average particle size of the carbon material according to the present embodiment is 9 μm or less, preferably from 2 μm to 9 μm, and more preferably from 5 to 9 μm. From the viewpoint of achieving good input/output characteristics, the volume-based average particle size is 9 μm or less, preferably 8.8 μm or less, and more preferably 8.6 μm or less. From the viewpoint of suppressing an excessive reaction with an electrolytic liquid and achieving suitable initial efficiency, the volume-based average particle size is preferably 2 μm or more, more preferably 3 μm or more, still more preferably 4 μm or more, and yet still more preferably 5 μm or more.

The volume-based average particle size of the carbon material can be adjusted by, for example, pulverization, disintegration, classification, or the like.

In the present specification, the volume-based average particle size is a value of volume-based median size $d_{50}$ measured by a laser diffraction/scattering particle size distribution analyzer, and specifically, is a value measured by a method described in Examples described below.

The true density of the carbon material according to the present embodiment is 2.25 g/cm$^3$ or less, and preferably from 2.10 g/cm$^3$ to 2.25 g/cm$^3$. From the viewpoint of suppressing an increase in irreversible capacity as a negative electrode material and achieving good initial efficiency and long-term storage recovery rate, the true density is 2.25 g/cm$^3$ or less, preferably 2.24 g/cm$^3$ or less, and more preferably 2.23 g/cm$^3$ or less.

From the same viewpoint, the true density is preferably 2.10 g/cm$^3$ or more, more preferably 2.15 g/cm$^3$ or more, and still more preferably 2.20 g/cm$^3$ or more.

The true density of the carbon material can be adjusted by the content of an amorphous carbonaceous substance described below, the heating temperature during production of the carbon material, and the like.

In the present specification, the true density is a value measured by a liquid phase displacement method (pycnometer method) using butanol, and specifically, is a value measured by a method described in Examples described below.

The Raman R value of the carbon material according to the present embodiment is 0.50 or less, preferably from 0.01 to 0.50, and more preferably from 0.20 to 0.50. From the viewpoint of suppressing an increase in irreversible capacity as the negative electrode material and achieving good initial efficiency and long-term storage recovery rate, and from the viewpoint of suppressing an excessive reaction with an electrolytic liquid and preventing a decrease in charge-discharge efficiency and an increase in gas generation, the Raman R value is 0.50 or less, preferably 0.49 or less, and more preferably 0.48 or less. From the viewpoint of avoiding a decrease in charge-discharge incapability due to the difficulty in planar orientation of crystals when the density is increased, the Raman R value is preferably 0.01 or more, more preferably 0.10 or more, and still more preferably 0.20 or more.

The Raman R value of the carbon material can be adjusted by the content of the amorphous carbonaceous substance described below, the heating temperature during the production of the carbon material, and the like.

Herein, the Raman R value is a value represented by the following equation.

Raman R value = (intensity $I_B$ of peak $P_H$ near 1360 cm$^{-1}$ in Raman spectrum analysis)/(intensity $I_A$ of peak $P_A$ near 1580 cm$^{-1}$ in Raman spectrum analysis)

In the above equation, "near 1580 cm$^{-1}$" refers to a range of from 1580 cm$^{-1}$ to 1620 cm$^{-1}$. Meanwhile, "near 1360 cm$^{-1}$" refers to a range of from 1350 cm$^{-1}$ to 1370 cm$^{-1}$.

The peak $P_A$ near 1580 cm$^{-1}$ is one of peaks characteristic of graphite, and is a peak called G band derived from a carbon planar structure, and the peak $P_H$ near 1360 cm$^{-1}$ is a peak called D band derived from disorder of the structure or introduction of defects.

The crystallinity of the carbon material and the proportion of defects can be evaluated by the Raman R value using these.

The Raman spectrum is obtained through measurement using a Raman spectrometer.

Specifically, after acquiring a microscopic Raman spectrum for each particle of 100 particles of the carbon material, the Raman R value is determined by averaging 100 Raman spectra. The measurement conditions are as follows.

Wavelength of laser light: 532 nm
Laser power on sample: 0.1 mW or less
Objective lens: NA0.50
Spectral resolution: 1.82 cm$^{-1}$/pixcel
Measurement range: 623 cm$^{-1}$ to 3526 cm$^{-1}$

When the volume-based average particle size, true density, and Raman R value of the carbon material according to the present embodiment satisfy the above ranges, an increase in irreversible capacity is suppressed when the carbon material is used as a negative electrode active material. The reason for this is unclear, but the present inventors consider the reason as follows.

In general, a carbon material having a smaller volume-based average particle size has improved input/output characteristics, and thus the volume-based average particle size is preferably 9 $\mu$m or less. Meanwhile, when the volume-based average particle size is small, the irreversible capacity and the storage characteristics are deteriorated. In contrast, it is considered that when the conditions are satisfied such that the true density and the Raman R value, which are indices representing the crystal state of carbon and the disorder of crystals, are respectively within the predetermined ranges, good input/output characteristics are maintained, and crystallinity is appropriately controlled even in a case where the volume-based average particle size is small, resulting in suppression of the irreversible capacity and improvement of the storage characteristics.

The volume-based particle size $d_{90}$ corresponding to cumulative 90% from a small particle side of the carbon material according to the present embodiment is preferably 15 $\mu$m or less, and more preferably from 9 $\mu$m to 15 $\mu$m. From the viewpoint of suppressing streaking when an electrode plate is formed, the particle size $d_{90}$ is preferably 15 $\mu$m or less, more preferably 14 $\mu$m or less, and still more preferably 13 $\mu$m or less. From the viewpoint of suppressing a decrease in strength of the electrode plate, the particle size $d_{90}$ is preferably 9 $\mu$m or more, more preferably 10 $\mu$m or more, and still more preferably 11 $\mu$m or more.

The particle size $d_{90}$ in the present specification means a particle size at which the integration of frequency % of particles from a small particle size side is 90% in a particle size distribution obtained at the time of measuring the volume-based average particle size $d_{50}$.

The volume-based particle size $d_{10}$ corresponding to cumulative 10% from a small particle side of the carbon material according to the present embodiment is preferably 6 $\mu$m or less, and more preferably from 1 $\mu$m to 6 $\mu$m. From the viewpoint of suppressing streaking when an electrode plate is formed, the particle size $d_{10}$ is preferably 6 $\mu$m or less, more preferably 5.7 $\mu$m or less, and still more preferably 5.4 $\mu$m or less. From the viewpoint of suppressing aggregation of particles and achieving good slurry stability and electrode plate strength, the particle size $d_{10}$ is preferably 1 $\mu$m or more, more preferably 2 $\mu$m or more, and still more preferably 3 $\mu$m or more.

The particle size $d_{10}$ in the present specification means a particle size at which the integration of frequency % of particles from a small particle size side is 10% in a particle size distribution obtained at the time of measuring the volume-based average particle size $d_{50}$.

The particle size of the carbon material according to the present embodiment preferably satisfies a volume-based average particle size $d_{50}$ of 9 $\mu$m or less, and at least one of a particle size $d_{90}$ of 15 $\mu$m or less, and a particle size $d_{10}$ of 6 $\mu$m or less, and more preferably satisfies all of a volume-based average particle size $d_{50}$ of 9 $\mu$m or less, a particle size $d_{90}$ of 15 $\mu$m or less, and a particle size $d_{10}$ of 6 $\mu$m or less.

More preferable ranges of the volume-based average particle size $d_{50}$, the particle size $d_{90}$, and the particle size $d_{10}$ are respectively the same as the ranges described above.

The DBP oil absorption amount of the carbon material according to the present embodiment is preferably 47 mL/100 mg or less, and more preferably from 20 mL/100 g to 47 mL/100 mg. From the viewpoint of suppressing streaking when an electrode plate is formed, the DBP oil absorption amount is preferably 47 mL/100 mg or less, more preferably 46 mL/100 mg or less, and still more preferably 45 mL/100 mg or less. From the viewpoint of avoiding a decrease in reactive surface due to the presence of suitable intraparticle voids, the DBP oil absorption amount is preferably 20 mL/100 mg or more, more preferably 30 mL/100 mg or more, and still more preferably 35 mL/100 mg or more.

The DBP oil absorption amount can be adjusted by the particle size and tap density of the carbon material, the content of the amorphous carbonaceous substance, and the like.

The DBP oil absorption amount in the present specification means dibutyl phthalate oil absorption amount, and is a value measured in accordance with ISO 4546, and more specifically, a value measured by a method described in Examples described below.

The total pore volume of the carbon material according to the present embodiment is preferably 0.58 mL/g or less, and more preferably from 0.35 mL/g to 0.58 mL/g. From the viewpoint of dispersibility of a thickener or a binder used when an electrode plate is formed, the total pore volume is preferably 0.58 mL/g or less, more preferably 0.57 mL/g or less, and still more preferably 0.56 mL/g or less. From the same viewpoint, the total pore volume is preferably 0.35 mL/g or more, more preferably 0.4 mL/g or more, and still more preferably 0.45 mL/g or more.

The total pore volume can be adjusted by the particle size of the carbon material and the content of the amorphous carbonaceous substance.

The total pore volume in the present specification is a value measured by mercury porosimetry with a mercury porosimeter, and more specifically, is a value measured by a method described in Examples described below.

The cumulative pore volume of pores of 3000 nm or less of the carbon material according to the present embodiment is preferably 0.3 mL/g or more, and more preferably from 0.3 mL/g to 0.55 mL/g. From the viewpoint of achieving good input/output characteristics, the cumulative pore volume is preferably 0.3 mL/g or more, more preferably 0.35 mL/g or more, and still more preferably 0.4 mL/g or more. From the viewpoint of suppressing an excessive reaction with an electrolytic liquid and achieving good initial efficiency, the cumulative pore volume is preferably 0.55 mL/g or less, more preferably 0.53 mL/g or less, and still more preferably 0.5 mL/g or less.

The cumulative pore volume of pores of 3000 nm or less is affected by the amounts of intraparticle voids and interparticle voids.

The cumulative pore volume of pores of 3000 nm or less can be adjusted by the structure and particle size of the carbon material, the production method, and the content of the amorphous carbonaceous substance.

The cumulative pore volume of pores of 3000 nm or less in the present specification is measured by the same method as that for the total pore volume.

The cumulative pore volume of pores of 1000 nm or less of the carbon material according to the present embodiment is preferably 0.1 mL/g or more, and more preferably from 0.1 mL/g to 0.5 mL/g. From the viewpoint of avoiding a decrease in reactive area, the cumulative pore volume is preferably 0.1 mL/g or more, more preferably 0.11 mL/g or more, and still more preferably 0.12 mL/g or more. From the viewpoint of suppressing an excessive reaction with an electrolytic liquid, the cumulative pore volume is preferably 0.5 mL/g or less, more preferably 0.4 mL/g or less, and still more preferably 0.3 mL/g or less.

The cumulative pore volume of pores of 1000 nm or less means the amount of intraparticle voids.

The cumulative pore volume of pores of 1000 nm or less can be adjusted by the method for producing the carbon material. For example, the cumulative pore volume can be adjusted by a known method such as a method of spheroidizing scaly graphite without a pulverization step, or a method of forming a folded structure described in WO 2015/080203.

The cumulative pore volume of pores of 1000 nm or less in the present specification is measured by the same method as that for the total pore volume.

The cumulative pore volume of pores of from 10 nm to 50 nm of the carbon material according to the present embodiment is preferably 0.01 mL/g or less, and more preferably from 0.001 mL/g to 0.01 mL/g. From the viewpoint of suppressing an excessive reaction with the electrolytic liquid, the cumulative pore volume is preferably 0.01 mL/g or less, more preferably 0.009 mL/g or less, and still more preferably 0.008 mL/g or less. From the viewpoint of avoiding a decrease in reactive area, the cumulative pore volume is preferably 0.001 mL/g or more, more preferably 0.002 mL/g or more, and still more preferably 0.003 mL/g or more.

The cumulative pore volume of pores of from 10 nm to 50 nm can be adjusted by the particle size of the carbon material and the content of the amorphous carbonaceous substance.

The cumulative pore volume of pores of from 10 nm to 50 nm in the present specification is a value measured by BJH analysis using an adsorption isotherm in nitrogen adsorption/desorption measurement, and more specifically, a value measured by a method described in Examples described below.

The carbon material according to the present embodiment preferably satisfies one or more of a total pore volume of 0.58 mL/g or less, a cumulative pore volume of pores of 3000 nm or less of 0.3 mL/g or more, a cumulative pore volume of pores of 1000 nm or less of 0.1 mL/g or more, and a cumulative pore volume of pores of from 10 nm to 50 nm of 0.01 mL/g or less, more preferably satisfies two or more of these conditions, still more preferably satisfies three or more of these conditions, and particularly preferably satisfies all four of these conditions.

The carbon material according to the present embodiment more preferably satisfies one or more of a total pore volume of from 0.35 mL/g to 0.58 mL/g, a cumulative pore volume of pores of 3000 nm or less of from 0.3 mL/g to 0.55 mL/g, a cumulative pore volume of pores of 1000 nm or less of from 0.1 mL/g to 0.5 mL/g, and a cumulative pore volume of pores of from 10 nm to 50 nm of 0.001 mL/g to 0.01 mL/g, still more preferably satisfies two or more of these conditions, yet still more preferably satisfies three or more of these conditions, and particularly preferably satisfies all four of these conditions.

The specific surface area of the carbon material according to the present embodiment is preferably from 1 $m^2$/g to 13 $m^2$/g. From the viewpoint of avoiding a decrease in reactive area, the specific surface area is preferably 1 $m^2$/g or more, more preferably 2 $m^2$/g or more, and still more preferably 2.5 $m^2$/g or more. From the viewpoint of suppressing an excessive reaction with an electrolytic liquid, the specific surface area is preferably 13 $m^2$/g or less, more preferably 10 $m^2$/g or less, and still more preferably 8 $m^2$/g or less.

The specific surface area can be adjusted by the particle size of the carbon material and the content of the amorphous carbonaceous substance.

The specific surface area in the present specification is a value measured by a nitrogen adsorption BET one-point method based on a gas flowing method among BET methods through nitrogen adsorption/desorption measurement, and more specifically, is a value measured by a method described in Examples described below.

The tap density of the carbon material according to the present embodiment is preferably from 0.70 $g/cm^3$ to 1.40 $g/cm^3$. From the viewpoint of capable of suppressing process defects such as streaking during formation of an electrode plate, increasing the density of a negative electrode sheet due to improvement in filling properties, and improving high-speed charge-discharge characteristics due to uniform shape of interparticle voids, the tap density is preferably 0.70 $g/cm^3$ or more, more preferably 0.80 $g/cm^3$ or more, and still more preferably 0.90 $g/cm^3$ or more. From the viewpoint of an electrode plate pressing property, high-speed charge-discharge characteristics, low-temperature input/output characteristics, and the like, due to provision of an appropriate space on the surfaces or interiors of particles, the tap density is preferably 1.40 $g/cm^3$ or less, more preferably 1.30 $g/cm^3$ or less, and still more preferably 1.20 $g/cm^3$ or less.

In the present specification, the tap density is a density calculated from the volume and mass of a sample when the sample is fully filled in a cylindrical tap cell having a diameter of 1.6 cm and a volumetric capacity of 20 $cm^3$ and then tapping is performed 1000 times with a stroke length of 10 mm, by using a powder density measuring device.

The circularity of the carbon material according to the present embodiment is preferably from 0.70 to 0.99. The circularity is preferably 0.70 or more, more preferably 0.80 or more, and still more preferably 0.90 or more, from the viewpoint that the tortuosity factor of lithium ion diffusion decreases, the movement of an electrolytic liquid into interparticle voids becomes smooth, and excellent rapid charge-discharge characteristics are achieved. The circularity is preferably 0.99 or less, more preferably 0.98 or less, and still more preferably 0.97 or less, from the viewpoint that the contact property between carbon material particles can be secured and excellent cycle characteristics are achieved.

The circularity in the present specification is a value obtained by measuring a particle size distribution of an equivalent circle diameter by flow particle image analysis and represented by {(the perimeter of an equivalent circle having the same area as a projected particle shape)/(the actual perimeter of the projected particle shape)}, and an average value of circularities of particles having an equivalent circle diameter in a range of from 1.5 $\mu$m to 40 $\mu$m, selected from an image obtained by photographing at least 1000 or more particles of the carbon material, is defined as the circularity.

The carbon dioxide gas adsorption amount of the carbon material according to the present embodiment is preferably from 0.01 mL/g to 0.13 mL/g. From the viewpoint of avoiding a decrease in reactive area, the carbon dioxide gas adsorption amount is preferably 0.01 mL/g or more, and more preferably 0.02 mL/g or more. From the viewpoint of suppressing an excessive reaction with an electrolytic liquid, the carbon dioxide gas adsorption amount is preferably 0.13 mL/g or less, more preferably 0.12 mL/g or less, still more preferably 0.11 mL/g or less, and particularly preferably 0.10 mL/g or less.

In the present specification, the carbon dioxide gas adsorption amount is measured by using sample dried at 350°C under reduced pressure for 2 hours. The carbon dioxide gas adsorption amount is a value of adsorption amount of carbon dioxide gas as an adsorption gas measured with a gas adsorption amount measuring apparatus at 0°C and a relative pressure range of from $1.0^{-7}$ to 0.03.

The carbon material according to the present embodiment preferably contains an amorphous carbonaceous substance, more preferably contains graphite and an amorphous carbonaceous substance, and still more preferably contains natural graphite and an amorphous carbonaceous substance.

The details of the graphite and the amorphous carbonaceous substance will be described below. When the volume-based average particle size $d_{50}$ of the carbon material is x ($\mu$m) and the content of the amorphous carbonaceous substance in the carbon material is y (mass%), the ratio of the content of the amorphous carbonaceous substance to the volume-based average particle size $d_{50}$, which is represented by y/x, is preferably from 0.5 to 2.0. From the viewpoint of the tortuosity factor, the ratio is preferably 0.5 or more, more preferably 0.6 or more, and still more preferably 0.7 or more. From the viewpoint of the tortuosity factor, the ratio is preferably 2.0 or less, more preferably 1.7 or less, and still more preferably 1.5 or less.

The content of the amorphous carbonaceous substance is preferably from 4 mass% to 15 mass%. The content is preferably 4 mass% or more, more preferably 4.5 mass% or more, and still more preferably 5 mass% or more, and is preferably 15 mass% or less, more preferably 12 mass% or less, and still more preferably 9 mass% or less.

The method for determining the content of the amorphous carbonaceous substance will be described below.

Method for Producing Carbon Material

The method for producing a carbon material according to the present embodiment includes the following steps in order:

(i) a step of mixing natural graphite having a volume-based average particle size $d_{50}$ of 9 $\mu$m or less with an amorphous carbonaceous substance precursor; and
(ii) a step of heating the mixture obtained in the step (i) until the Raman R value reaches 0.50 or less.

In the step (i), the mixing ratio between the natural graphite and the amorphous carbonaceous substance precursor is adjusted so that the content of the amorphous carbonaceous substance in the resultant carbon material is from 4 mass% to 15 mass%.

The method for producing of a carbon material described above in Carbon Material is not particularly limited as long as a carbon material having a volume-based average particle size $d_{50}$, a true density, and a Raman R value within the desired ranges can be produced, but the carbon material according to one embodiment can be produced by the above production method.

Further, preferred embodiments of the carbon material produced by the method for producing a carbon material according to the present embodiment are the same as the preferred embodiments described above in Carbon Material.

Step (i)

In the step (i) in the method for producing a carbon material according to the present embodiment, natural graphite having a volume-based average particle size $d_{50}$ of 9 $\mu$m or less is mixed with an amorphous carbonaceous substance precursor.

•Natural Graphite

The natural graphite in the present embodiment is not particularly limited as long as the volume-based average particle size $d_{50}$ is 9 $\mu$m or less, and examples thereof include amorphous graphite, flake graphite, and scaly graphite. Among these, flake graphite or scaly graphite is preferred, and scaly graphite is more preferred, from the viewpoint of having a high degree of graphitization and a small amount of impurities.

Furthermore, spheroidized natural graphite is particularly preferable from the viewpoint of the filling property of particles and the charge-discharge load characteristics due to formation of suitable dense pores inside the carbon material. The spheroidized natural graphite is particularly preferably obtained by spheroidizing the scaly graphite.

As used herein, the spheroidized natural graphite means natural graphite having a circularity of 0.70 or more. When the natural graphite in the present embodiment is spheroidized natural graphite, the circularity thereof only needs to be 0.70 or more, but is preferably 0.80 or more, and more preferably 0.90 or more. The upper limit of the circularity is not particularly limited, and may be 1.

The volume-based average particle size $d_{50}$ of the natural graphite in the present embodiment is 9 $\mu$m or less, and preferably from 2 $\mu$m to 9 $\mu$m. From the viewpoint of reducing the volume-based average particle size $d_{50}$ of the produced carbon material and from the viewpoint of suppressing process problems such as streaking at the time of formation of an electrode plate, the volume-based average particle size $d_{50}$ is 9 $\mu$m or less, preferably 8.8 $\mu$m or less, and more preferably 8.6 $\mu$m or less. From the viewpoint of preventing the specific surface area from becoming too large and suppressing the activity on an electrolytic liquid, the volume-based average particle size $d_{50}$ is preferably 2 $\mu$m or more, more preferably 3 $\mu$m or more, and still more preferably 4 $\mu$m or more.

The true density of the natural graphite in the present embodiment is preferably from 2.20 g/cm$^3$ to 2.26 g/cm$^3$. Since the theoretical value of the true density of the graphite is 2.26 g/cm$^3$, the true density is 2.26 g/cm$^3$ or less. From the viewpoint of suppressing an increase in irreversible capacity as the negative electrode material of the produced carbon material and achieving good initial efficiency and long-term storage recovery rate, the true density is preferably 2.20 g/cm$^3$ or more, more preferably 2.22 g/cm$^3$ or more, and still more preferably 2.24 g/cm$^3$ or more.

The Raman R value of the natural graphite in the present embodiment is usually from 0.1 to 0.9. The Raman R value is usually 0.1 or more, preferably 0.15 or more, and more preferably 0.2 or more, from the viewpoint that the crystallinity of particle surfaces is less likely to be high, and crystals are less likely to be oriented in a direction parallel to the negative electrode plate when the density is increased, and deterioration of load characteristics can be avoided. From the viewpoint that the crystallinity of particle surfaces is less likely to be disordered, the reactivity with an electrolytic liquid is suppressed, and a decrease in charge-discharge efficiency and an increase in gas generation can be avoided, the Raman R value is usually 0.9 or less, preferably 0.7 or less, and more preferably 0.5 or less.

The volume-based particle size $d_{90}$ corresponding to cumulative 90% from a small particle side of the natural graphite in the present embodiment is preferably 15 $\mu$m or less, and more preferably from 9 $\mu$m to 15 $\mu$m. From the viewpoint of suppressing streaking when an electrode plate is formed, the particle size $d_{90}$ is preferably 15 $\mu$m or less, more preferably 14 $\mu$m or less, and still more preferably 13 $\mu$m or less. From the viewpoint of suppressing a decrease in strength of the electrode plate, the particle size $d_{90}$ is preferably 9 $\mu$m or more, more preferably 10 $\mu$m or more, and still more preferably 11 $\mu$m or more.

The volume-based particle size $d_{10}$ corresponding to cumulative 10% from a small particle side of the natural graphite in the present embodiment is preferably 6 $\mu$m or less, and more preferably from 1 $\mu$m to 6 $\mu$m. From the viewpoint of suppressing streaking when an electrode plate is formed, the particle size $d_{10}$ is preferably 6 $\mu$m or less, more preferably 5.7 $\mu$m or less, and still more preferably 5.4 $\mu$m or less. From the viewpoint of suppressing aggregation of particles and achieving good slurry stability and electrode plate strength, the particle size $d_{10}$ is preferably 1 $\mu$m or more, more preferably 2 $\mu$m or more, and still more preferably 3 $\mu$m or more.

The DBP oil absorption amount of the natural graphite in the present embodiment is preferably from 40 mL/100 g to 70 mL/100 mg. From the viewpoint of suppressing streaking when an electrode plate is formed, the DBP oil absorption amount is preferably 70 mL/100 mg or less, more preferably 66 mL/100 mg or less, and still more preferably 63 mL/100 mg or less. From the viewpoint of avoiding a decrease in reactive surface due to the presence of suitable intraparticle voids, the DBP oil absorption amount is preferably 40 mL/100 mg or more, more preferably 45 mL/100 mg or more, and still more preferably 50 mL/100 mg or more.

The total pore volume of the natural graphite in the present embodiment is preferably from 0.1 mL/g to 1.5 mL/g. From the viewpoint of an effect of dispersing a thickener or a binder at the time of formation of an electrode plate, the total pore volume is preferably 0.1 mL/g or more, more preferably 0.2 mL/g or more, and still more preferably 0.3 mL/g or more. From the same viewpoint, the total pore volume is preferably 1.5 mL/g or less, more preferably 1.2 mL/g or less, and still more preferably 1.0 mL/g or less.

The cumulative pore volume of pores of 3000 nm or less of the natural graphite in the present embodiment is preferably from 0.1 mL/g to 1.0 mL/g. From the viewpoint of achieving good input/output characteristics, the cumulative pore volume is preferably 0.1 mL/g or more, more preferably 0.2 mL/g or more, and still more preferably 0.3 mL/g or more. From the viewpoint of suppressing an excessive reaction with an electrolytic liquid and achieving good initial efficiency, the cumulative pore volume is preferably 1.0 mL/g or less, more preferably 0.9 mL/g or less, and still more preferably 0.8 mL/g or less.

The cumulative pore volume of pores of 1000 nm or less of the natural graphite in the present embodiment is more preferably from 0.05 mL/g to 0.5 mL/g. From the viewpoint of avoiding a decrease in reactive area, the cumulative pore volume is preferably 0.05 mL/g or more, more preferably 0.1 mL/g or more, and still more preferably 0.12 mL/g or more. From the viewpoint of suppressing an excessive reaction with an electrolytic liquid, the cumulative pore volume is preferably 0.5 mL/g or less, more preferably 0.3 mL/g or less, and still more preferably 0.2 mL/g or less.

The cumulative pore volume of pores of from 10 nm to 50 nm of the natural graphite in the present embodiment is more preferably from 0.001 mL/g to 0.1 mL/g. From the viewpoint of suppressing an excessive reaction with an electrolytic liquid, the cumulative pore volume is preferably 0.1 mL/g or less, more preferably 0.07 mL/g or less, and still more preferably 0.05 mL/g or less. From the viewpoint of avoiding a decrease in reactive area, the cumulative pore volume is preferably 0.001 mL/g or more, more preferably 0.01 mL/g or more, and still more preferably 0.015 mL/g or more.

The specific surface area of the natural graphite in the present embodiment is usually from 0.3 $m^2$/g to 30 $m^2$/g. From the viewpoint of sufficiently ensuring sites for Li to enter and exit and achieving good high-speed charge-discharge characteristics and output characteristics, the specific surface area is usually 0.3 $m^2$/g or more, preferably 0.5 $m^2$/g or more, more preferably 1 $m^2$/g or more, still more preferably 2 $m^2$/g or more, and particularly preferably 5 $m^2$/g or more. From the viewpoint of suppressing an increase in initial irreversible capacity by moderately suppressing the activity of the active material on an electrolytic liquid and producing a high-capacity battery, the specific surface area is usually 30 $m^2$/g or less, preferably 20 $m^2$/g or less, and more preferably 15 $m^2$/g or less.

The tap density of the natural graphite in the present embodiment is usually from 0.1 $g/cm^3$ to 1.3 $g/cm^3$. From the viewpoint of achieving good high-speed charge-discharge characteristics, the tap density is usually 0.1 $g/cm^3$ or more, preferably 0.15 $g/cm^3$ or more, more preferably 0.2 $g/cm^3$ or more, and still more preferably 0.3 $g/cm^3$ or more. From the viewpoint of suppressing an increase in intraparticle carbon density and suppressing a decrease in rollability, thereby easily forming a high-density negative electrode sheet, the tap density is usually 1.3 $g/cm^3$ or less, preferably 1.2 $g/cm^3$ or less, and more preferably 1.1 $g/cm^3$ or less.

The natural graphite in the present embodiment may be a commercially available product or may be produced. A commercially available product may be used after being appropriately treated.

Examples of the treatment include particle size adjustment, spheroidization treatment, and pressurization treatment.

The method for adjusting the particle size of the natural graphite is not particularly limited, and a known method can be adopted. Examples of the method include pulverization, disintegration, and classification.

The method for spheroidization treatment of the natural graphite is not particularly limited, and a method known in the related art can be adopted. A granulating agent may be mixed before the spheroidization treatment, and the granulating agent may be removed after the spheroidization treatment.

The method for spheroidization treatment of the natural graphite in the present embodiment is not particularly limited, and a method known in the related art can be adopted. The method for spheroidization treatment is preferably a method in which mechanical energy is applied for the spheroidization treatment of the natural graphite because the shape of particles is easily controlled.

Examples of the mechanical energy include impact, compression, friction, and shear force. One type of these mechanical energies may be used alone or two or more types thereof may be used in combination.

In the method for spheroidization treatment of natural graphite by application of mechanical energy, an apparatus applying mechanical energy may be used.

•Amorphous Carbonaceous Substance Precursor

In the method for producing a carbon material according to the present embodiment, a known amorphous carbonaceous substance precursor can be employed as the amorphous carbonaceous substance precursor to be mixed with natural graphite. Examples of the amorphous carbonaceous substance precursor include tar, pitch, aromatic hydrocarbons such as naphthalene and anthracene, and thermoplastic resins such as phenolic resins and polyvinyl alcohol resins. One type of these precursors may be used alone, or two or more types thereof may be used in combination.

Among these amorphous carbonaceous substance precursors, tar, pitch, and aromatic hydrocarbons are preferred because a carbon structure is easily developed and coating can be performed with a small amount, and dehydrated tar is more preferable as tar.

The residual carbon rate of the amorphous carbonaceous substance precursor is preferably 10 mass% or more, and more preferably 20 mass% or more.

The content of ash in the amorphous carbonaceous substance precursor in the present embodiment is preferably from 0.00001 mass% to 1 mass%. The content is preferably 0.00001 mass% or more. The content is preferably 1 mass% or less, more preferably 0.5 mass% or less, and still more preferably 0.1 mass% or less.

The content of metal impurities in the amorphous carbonaceous substance precursor in the present embodiment is preferably from 0.1 ppm by mass to 1000 ppm by mass. The content is preferably 0.1 ppm by mass or more. The content is preferably 1000 ppm by mass or less, more preferably 500 ppm by mass or less, and still more preferably 100 ppm by mass or less.

In the present specification, the metal impurity content means a value obtained by dividing the total content of Fe, Al, Si, and Ca in the amorphous carbonaceous substance precursor by the residual carbon rate.

Qi (quinoline insoluble content) in the amorphous carbonaceous substance precursor in the present embodiment is preferably 5 mass% or less, and more preferably 3 mass% or less.

•Mixing

The mixing of the natural graphite and the amorphous carbonaceous substance precursor in the present embodiment can be performed by a known method. Examples of the method include a method in which the natural graphite and the amorphous carbonaceous substance precursor are mixed using a mixer or a kneader, and a method in which the natural graphite is added to a solution in which the amorphous carbonaceous substance precursor is dissolved and then the solvent is removed. Among these methods, the method in which the natural graphite and the amorphous carbonaceous substance precursor are mixed using a mixer or a kneader is preferred, from the viewpoint of uniform mixing within a short time.

The mixing ratio between the natural graphite and the amorphous carbonaceous substance precursor is adjusted so that the content of the amorphous carbonaceous substance in the produced carbon material is from 4 mass% to 15 mass%. The amount of the amorphous carbonaceous substance precursor to be mixed with the natural graphite can be calculated from the residual carbon rate of the amorphous carbonaceous substance precursor.

Step (ii)

In the step (ii) of the method for producing a carbon material according to the present embodiment, the mixture obtained in the step (i) is heated until the Raman R value reaches 0.50 or less, thereby producing a carbon material.

The Raman R value of the produced carbon material can be adjusted by the temperature, time, and atmosphere during heating, the content of the amorphous carbonaceous substance, and the like.

The heating temperature is preferably 1200°C or higher, and preferably from 1200°C to 1500°C. From the viewpoint of developing a crystal structure at the minimum, the temperature is preferably 1200°C or higher, more preferably 1230°C or higher, and still more preferably 1250°C or higher. From the viewpoint of preventing a crystal structure from reaching equivalent to the crystal structure of graphite, the temperature is preferably 1500°C or lower, more preferably 1450°C or lower, and still more preferably 1400°C or lower.

The heating time is preferably from 0.1 hours to 1000 hours. From the viewpoint of suppressing uneven heating, the time is preferably 0.1 hours or longer, more preferably 0.5 hours or longer, and still more preferably 1 hour or longer. From the viewpoint of productivity, the time is preferably 1000 hours or shorter, more preferably 750 hours or shorter, and still more preferably 500 hours or shorter.

The heating atmosphere is preferably a non-oxidizing atmosphere, and the oxygen concentration in the atmosphere is preferably 1 vol% or less, more preferably 0.1 vol% or less, and still more preferably 0.01 vol% or less. A lower the oxygen concentration is more preferable.

From the viewpoint of suppressing oxidation, the heating atmosphere is more preferably a nitrogen atmosphere, an argon atmosphere, or a carbon dioxide atmosphere, and still more preferably a nitrogen atmosphere. A mixed gas atmosphere containing two or more types selected from nitrogen, argon, and carbon dioxide may be used.

The amorphous carbonaceous substance precursor in the mixture is amorphously carbonized by the heating, and the precursor is formed into an amorphous carbonaceous substance, whereby the carbon material according to the present embodiment is produced.

The content of the amorphous carbonaceous substance in the carbon material is from 4 mass% to 15 mass%. From the viewpoint of achieving a more uniform coating state and good charge acceptance, the content is 4 mass% or more, preferably 4.5 mass% or more, and more preferably 5 mass% or more. From the viewpoint of achieving good rollability when an electrode plate is formed, the content is 15 mass% or less, preferably 12 mass% or less, and more preferably 9 mass% or less.

The content of the amorphous carbonaceous substance in the carbon material can be determined by Equation (1) described below. That is, the content is determined from the mixing ratio between the graphite and the amorphous carbonaceous substance and a firing yield after the firing.

$$\text{Content (\%) of amorphous carbonaceous substance} = (\text{[mass of sample after firing - mass of graphite]}/\text{[mass of sample after firing]}) \times 100 \tag{1}$$

When the mixing ratio and the firing yield are unknown, the content of the amorphous carbonaceous substance is estimated using the difference in true density between the graphite and the amorphous carbonaceous substance.

Specifically, the crystallinity of the graphite in the carbon material is confirmed by a d002 value, and, in the case of a high crystal having a d002 value of 3.357 Å or less, the content of the amorphous carbonaceous substance is estimated using Equation (2) described below.

$$\text{Content (\%) of amorphous carbonaceous substance} = 596.72 - 264.02 \times \text{true density} \tag{2}$$

After the step (ii), pulverization, disintegration, classification, or the like may be performed as necessary to adjust the volume-based average particle size $d_{50}$ of the carbon material to a desired range. Especially, it is preferable to disintegrate and classify the produced carbon material.

Negative Electrode and Production Method Therefor

The negative electrode according to the present embodiment contains the carbon material described above in Carbon Material. Specifically, the negative electrode according to the present embodiment includes a current collector and a negative electrode active material layer formed on the current collector, and the negative electrode active material layer contains the carbon material described above in Carbon Material.

In the negative electrode or the negative electrode active material layer, the carbon material has a functional effect as a negative electrode active material. Preferred embodiments of the carbon material are the same as the preferred embodiments described above in Carbon Material.

That is, the method for producing a negative electrode according to the present embodiment includes a step of applying the carbon material onto a current collector.

The method of applying the carbon material onto the current collector is not particularly limited, but, for example, from the viewpoint of achieving low cost and excellent productivity, a method is preferable in which a slurry prepared by blending an optional component such as a binder resin (binder) in the carbon material is applied onto the current collector and dried.

Examples of the optional component include a thickener and an electrically conductive auxiliary agent besides the binder resin. Examples of the electrically conductive auxiliary agent include carbon black, carbon nanotube, and artificial graphite.

An organic solvent such as alcohol, water, or the like can be used as a dispersion medium for forming the slurry.

As the current collector, a known current collector can be used, and examples thereof include metal thin films such as a copper foil and a stainless steel foil. Examples of the copper foil include a rolled copper foil and an electrolytic copper foil.

After the drying, pressurization is preferably performed to increase the density of the negative electrode active material layer formed on the current collector and to increase the battery capacity per unit volume.

The density of the negative electrode active material layer varies depending on the application. For example, in an application in which the capacity is important, the density is preferably from 1.00 $g/cm^3$ to 1.90 $g/cm^3$. From the viewpoint of ensuring the battery capacity per unit volume, the density is preferably 1.00 $g/cm^3$ or more, and more preferably 1.05 $g/cm^3$ or more. From the viewpoint of suppressing deterioration of rate characteristics, the density is preferably 1.90 $g/cm^3$ or less, and more preferably 1.80 $g/cm^3$ or less.

Secondary Battery and Production Method Therefor

The secondary battery according to the present embodiment includes a positive electrode, a negative electrode, and an electrolyte. The positive electrode and the negative electrode can store and release lithium ions.

Especially, the negative electrode is as described above in Negative Electrode, i.e., the negative electrode contains the carbon material described above in Carbon Material, and more specifically contains the carbon material described above in Carbon Material as a negative electrode active material.

That is, the method for producing a secondary battery according to the present embodiment is a method for producing a secondary battery including a positive electrode, a negative electrode, and an electrolyte, in which the negative electrode is produced by the production method described above in Negative Electrode.

The positive electrode may be any electrode that can store and release lithium ions, and a known positive electrode can be adopted. Specifically, a positive electrode active material layer formed on a current collector, the layer containing a positive electrode active material and a binder, can be used.

The electrolyte may be any electrolyte having lithium ion conductivity, and a known electrolyte can be adopted. Examples of the electrolyte include a non-aqueous electrolytic liquid obtained by dissolving a lithium salt in a non-aqueous solvent, and a non-aqueous electrolytic liquid which is gelled, rubberized, or formed into a solid sheet by an organic polymer compound or the like.

When the electrolyte is in a liquid state, the secondary battery according to the present embodiment further includes a separator to prevent a short circuit between electrodes.

As the separator, a known separator can be adopted, and examples thereof include porous separators such as a porous membrane and a non-woven fabric. The method for producing a negative electrode includes a step of applying the carbon material onto a current collector.

Application

When the carbon material according to the present embodiment is used as a negative electrode active material of a secondary battery, it is possible to achieve good initial efficiency and long-term storage recovery rate without increasing irreversible capacity. Therefore, the carbon material according to the present embodiment can be suitably used as a negative electrode active material of a secondary battery, can be more suitably used as a negative electrode active material of a non-aqueous secondary battery, and can be particularly suitably used as a negative electrode active material of a lithium-ion secondary battery.

Examples

Hereinafter, the present invention will be described in more detail by way of Examples, but the present invention is not limited to the description of the following Examples without departing from the gist of the present invention.

Measurement and Evaluation

Volume-Based Average Particle Size $d_{50}$

0.01 g of the produced carbon material was suspended in 10 mL of a 0.2 mass% aqueous solution of polyoxyethylene sorbitan monolaurate (Tween 20, available from Kishida Chemical Co., Ltd.) as a surfactant, and the suspension was introduced into a laser diffraction/scattering type particle size distribution analyzer (LA-920, available from HORIBA, Ltd.). Then, after irradiation with an ultrasonic wave of 28 kHz at an output of 60 W for 1 minute, a volume-based particle size distribution was obtained by the aforementioned analyzer. The volume-based median size obtained from the particle size distribution was defined as the volume-based average particle size $d_{50}$ of the carbon material. The results are shown in "$d_{50}$ ($\mu$m)" of "Particle size" in Table 1.

Particle Size $d_{10}$

The particle size $d_{10}$ of the carbon material was defined as a particle size at which the integration of frequency % of particles from a small particle size side is 10% in the particle size distribution obtained in the above-described Volume-Based Average Particle Size $d_{50}$. The results are shown in "$d_{10}$ ($\mu$m)" of "Particle size" in Table 1.

Method for Measuring Particle Size $d_{90}$

The particle size $d_{90}$ of the carbon material was defined as a particle size at which the integration of frequency % of particles from a small particle size side is 90% in the particle size distribution obtained in the above-described Volume-Based Average Particle Size $d_{50}$. The results are shown in "$d_{90}$ ($\mu$m)" of "Particle size" in Table 1.

Specific Surface Area

Using a specific surface area measuring apparatus (Macsorb HM-1210, available from Mountech Co., Ltd.), the carbon material was subjected to preliminary drying under reduced pressure at 350°C for 15 minutes under a nitrogen stream, and then cooled to a liquid nitrogen temperature. A nitrogen-helium mixed gas accurately adjusted so that the value of relative pressure of nitrogen to the atmospheric pressure was 0.3 was used to measure the specific surface area of the carbon material by the nitrogen adsorption BET one-point method based on the gas flow method. The results are shown in "Specific surface area ($m^2$/g)" in Table 1.

True Density

The true density of the carbon material was measured by the liquid phase displacement method (pycnometer method) using butanol. The number of times of measurement of the true density was 5, and an average value thereof was taken as the true density of the carbon material. The results are shown in "True density (g/$cm^3$)" in Table 1.

DBP Oil Absorption Amount

The DBP oil absorption amount of the carbon material was measured in accordance with ISO 4546: 1993.
Specifically, 30 g of the carbon material was charged into an oil absorption amount measurement apparatus (S410D, available from Asahi Soken Co., Ltd.), and the measurement was performed under conditions of a dropping rate of 4 mL/min and a rotation speed of 200 rpm. The results are shown in "DBP oil absorption amount (mL/100 g)" in Table 1.

Total Pore Volume, Cumulative Pore Volume of Pores of 3000 nm or Less, and Cumulative Pore Volume of Pores of 1000 nm or Less

The carbon material weighed to have a value of around 0.2 g was sealed in a cell for powder of a mercury porosimeter (Autopore 9520, available from Micromeritics), and degassed at 25°C under vacuum (50 $\mu$mHg or less) for 10 minutes to perform a pre-treatment. Subsequently, the pressure was reduced to 4 psia (about 28 kPa), mercury was introduced into the cell for powder, and the pressure was increased stepwise from 4 psia (about 28 kPa) to 40000 psia (about 280 MPa), and then reduced to 25 psia (about 170 kPa). The number of steps at the time of pressure increase was 80 or more, and, in each step, the amount of mercury intruded was measured after an equilibrium time of 10 seconds.
From the resultant mercury intrusion curve obtained as described above, a pore distribution was calculated using a Washburn equation. In the calculation, the surface tension ($\gamma$) of mercury was 485 dyne/cm, and the contact angle ($\psi$) of mercury was 140°.
From the obtained results, the total pore volume, the cumulative pore volume of pores of 3000 nm or less, and the cumulative pore volume of pores of 1000 nm or less were respectively determined. The results are shown in "Total pore volume (mL/g)", "3000 nm or less (mL/g)" of "Cumulative pore volume", and "1000 nm or less (mL/g)" of "Cumulative pore volume" in Table 1.

Cumulative Pore Volume of Pores of 10 nm to 50 nm

The carbon material was subjected to heating treatment under reduced pressure at 100°C for 3 hours, and then an adsorption isotherm was obtained using a gas adsorption amount measurement apparatus (Autosorb 3B, available from Quantachrome Instruments) and nitrogen gas as an adsorption gas at the liquid nitrogen temperature. A mesopore volume and a mesopore surface area at each pore size were determined by BJH analysis using the obtained adsorption isotherm under the assumption that mesopores were cylindrical. From the obtained results, the cumulative pore volume of pores of from 10 nm to 50 nm was determined. The results are shown in "10 nm to 50 nm (mL/g)" of "Cumulative pore volume" in Table 1.

Raman R Value

For 100 particles of the carbon material, a microscopic Raman spectrum was obtained for each particle with a Raman spectrometer ("labRAM-HR Evolution" available from Horiba, Ltd.), and then a spectrum was obtained by averaging 100 Raman spectra.
The measurement conditions were as follows.

Wavelength of laser light: 532 nm
Laser power on sample: 0.1 mW or less
Objective lens: NA0.50
Spectral resolution: 1.82 cm$^{-1}$/pixcel
Measurement range: 623 cm$^{-1}$ to 3526 cm$^{-1}$

From the averaged spectrum obtained as described above, the intensity $I_B$ of the peak $P_B$ near 1360 cm$^{-1}$ and the intensity $I_A$ of the peak $P_A$ near 1580 cm$^{-1}$ were determined, and the Raman R value represented by (intensity $I_B$/intensity $I_A$) was determined. The results are shown in "Raman R value" in Table 1.

Test Example; Carbon Material

Example 1-1

The carbon material raw material was subjected to spheroidization treatment so that the pore volume was a predetermined value. Spheroidized natural graphite (volume-based average particle size $d_{50}$: 7.5 $\mu$m) and dehydrated tar as an amorphous carbonaceous substance precursor were blended so that the content of the amorphous carbonaceous substance in the produced carbon material was 6.5 mass%, and mixed using a mixer. The obtained mixture was subjected to heating treatment at 1300°C for 2 hours in an inert gas atmosphere prepared by circulating nitrogen so as to adjust the oxygen concentration in a furnace to 0.01 vol% or less. The resultant fired product was subjected to disintegration and classification treatments to produce a carbon material having a content of the amorphous carbonaceous substance of 6.5 mass%.

Example 1-2

A carbon material having a content of the amorphous carbonaceous substance of 9.0 mass% was produced in the same manner as in Example 1-1 except that the blending amount of the dehydrated tar as an amorphous carbonaceous substance precursor was changed.

Comparative Example 1-1

A carbon material having a content of the amorphous carbonaceous substance of 6.5 mass% was produced in the same manner as in Example 1-1 except that the temperature of the heating treatment was set to 1000°C.

Comparative Example 1-2

A carbon material having a content of the amorphous carbonaceous substance of 9.0 mass% was produced in the same manner as in Example 1-2 except that the temperature of the heating treatment was set to 1000°C.

Test Example; Secondary Battery

Example 2-1

An electrode plate was prepared using the carbon material produced in Example 1-1 as a negative electrode active material.

Specifically, 50.00 ± 0.02 g of 1 mass% aqueous sodium carboxymethyl cellulose solution (0.50 g on a solid content basis) and 1.00 ± 0.05 g of an aqueous dispersion of styrenebutadiene rubber having a weight average molecular weight of 270000 (0.50 g on a solid content basis) were added to 50.00 ± 0.02 g of the carbon material produced in Example 1-1 with stirring for 5 minutes using a hybrid mixer (available from KEYENCE CORPORATION), and the mixture was defoamed for 30 seconds to prepare a slurry.

The prepared slurry was applied, with a width of 10 cm, onto a 10 $\mu$m-thick copper foil as a current collector using a die coater so that the negative electrode material after drying was attached in an amount of 10.00 ± 0.20 mg/cm$^2$. After drying, the resultant product was cut into a width of 5 cm, and roll-pressed using a roller having a diameter of 20 cm. The roll pressing was performed by adjusting the density of the active material layer to 1.50 ± 0.03 g/cm$^3$, thereby forming a negative electrode sheet.

The negative electrode sheet formed above was punched into a disk shape having a diameter of 12.5 mm to produce a negative electrode. A counter electrode was formed by punching a lithium metal foil into a disk shape having a diameter of 14 mm. A separator (made of a porous polyethylene film) impregnated with an electrolytic liquid prepared by dissolving LiPF$_6$ in a mixed solvent of ethylene carbonate and ethyl methyl carbonate (volume ratio 30:70) to achieve 1 mol/L was placed between both electrodes to prepare a 2016 coin battery as a secondary battery.

Example 2-2, Comparative Example 2-1, and Comparative Example 2-2

A 2016 coin battery as a secondary battery was prepared in the same manner as in Example 2-1 except that the carbon material produced in Example 1-1 was changed to each of the carbon materials produced in Example 1-2, Comparative Example 1-1, and Comparative Example 1-2.

Evaluation; Irreversible Capacity and Initial Efficiency of Negative Electrode

The prepared coin battery was charged to 5 mV with respect to the lithium counter electrode at a current density of 0.05 C, and further charged at a constant voltage of 5 mV until the current density became 0.005 C, thereby doping the negative electrode with lithium. Thereafter, the battery was discharged to 1.5 V with respect to the lithium counter electrode at a current density of 0.1 C. The difference between the charge capacity and the discharge capacity at this time was defined as an irreversible capacity, and the ratio of the discharge capacity to the charge capacity {(discharge capacity/charge capacity) × 100} was defined as an initial efficiency (%).

The results are shown in "Irreversible capacity (mAh/g)" and "Initial efficiency (%)" in Table 2.

Test Example; Secondary Battery

Example 3-1

First, a positive electrode sheet was prepared.

Specifically, 85 mass% of lithium nickel-manganese-cobaltate (LiNiMnCoO$_2$) as a positive electrode active material was mixed with 10 mass% of acetylene black as an electrically conductive material and 5 mass% of polyvinylidene fluoride (PVdF) as a binder in N-methylpyrrolidone to prepare a slurry.

The prepared slurry was applied onto a 15 $\mu$m-thick aluminum foil as a current collector using a blade coater so that the positive electrode material was attached in an amount of 22.5 ± 0.2 mg/cm$^2$, and then dried at 130°C. In addition, roll pressing was performed to adjust the density of the positive electrode material to 2.60 ± 0.05 g/cm$^3$, thereby forming a positive electrode sheet.

A negative electrode sheet was prepared using the carbon material produced in Example 1-1 in the same manner as in Example 2-1 except that the density of the active material layer was adjusted to 1.20 ± 0.03 g/cm$^3$. The negative electrode sheet, a separator made of polyethylene, and the positive electrode sheet formed above were laminated in this order.

The resultant laminate was wrapped with a cylindrical aluminum laminate film, and an electrolytic liquid prepared by adding 0.5 mass% of vinylene carbonate to a mixed solvent of ethylene carbonate and ethyl methyl carbonate (volume ratio of 30:70) and dissolving LiPF$_6$ to achieve 1 mol/L was injected into the wrapped laminate. Subsequently, the laminate was vacuum-sealed to prepare a sheet-form non-aqueous lithium-ion secondary battery. Thereafter, in order to further enhance the adhesiveness between the electrodes, the sheet-form non-aqueous lithium-ion secondary battery prepared above was sandwiched between a pair of glass plates and pressurized.

Example 3-2, Comparative Example 3-1, and Comparative Example 3-2

A sheet-form non-aqueous lithium-ion secondary battery having enhanced adhesiveness was produced in the same manner as in Example 3-1 except that the carbon material produced in each of Example 1-2, Comparative Example 1-1, and Comparative Example 1-2 was used for the negative electrode sheet.

Evaluation; Storage Recovery Rate

The produced sheet-form non-aqueous lithium-ion secondary batteries (Example 3-1, Example 3-2, Comparative Example 3-1, and Comparative Example 3-2) were charged at a current value of 0.2 C to a state of charge (SOC) of 80% in an environment at 25°C, and then stored in an environment at 60°C for 2 weeks or 4 weeks. The capacities (residual capacities) when the non-aqueous lithium-ion secondary batteries after storage were discharged at a current value of 0.2 C to 3.0 V in an environment at 25°C, and the discharge capacities (recovery capacities) when the non-aqueous lithium-ion secondary batteries were further charged and discharged at a current value of 0.2 C from 4.1 V to 3.0 V were measured. The value ((recovered capacity/initial capacity) $\times$ 100) was defined as the storage recovery rate (%) after 2 weeks or the storage recovery rate (%) after 4 weeks.
The results are shown in "Storage recovery rate (%) after 2 weeks" and "Storage recovery rate (%) after 4 weeks" in Table 2.

Evaluation: Low-Temperature Output Characteristics

The lithium-ion secondary batteries of Example 3-1 and Example 3-2 were charged at a current value of 0.2 C until the SOC (state of charge) reached 50%, and then constant-current discharged for 10 seconds at current values of 0.25 C, 0.50 C, 1.00 C, 1.25 C, 1.50 C, and 2.00 C in a low-temperature environment at -30°C. The battery voltage drop after 2 seconds in charging under each of the conditions was measured. From these measured values, a current value I that could flow for 10 seconds was calculated when the lower limit of discharge voltage was set to 3.0 V, and a value calculated by the formula: 3.0 $\times$ I (W) was taken as the low-temperature output characteristics of each battery.

Test Example; Carbon Material

Example 4-1

Two disks each having a diameter of 12.5 mm were prepared by punching out the negative electrode sheet prepared in Example 3-1, and the disks were arranged so that the active material layers faced each other. A separator (made of a porous polyethylene film) impregnated with an electrolytic liquid prepared by dissolving $LiPF_6$ in a mixed solvent of ethylene carbonate and ethyl methyl carbonate (volume ratio 30:70) to achieve 1 mol/L was placed between the facing negative electrode sheets to prepare a 2016 coin battery.

Example 4-2, Comparative Example 4-1, and Comparative Example 4-2

A 2016 coin battery was prepared in the same manner as in Example 4-1 except that the negative electrode sheet produced in each of Example 3-2, Comparative Example 3-1, and Comparative Example 3-2 was used as the negative electrode sheet.

Evaluation: Tortuosity Factor

The prepare 2016 coin battery was allowed to stand at 25°C for 24 hours, and then impedance response analysis was performed. In the impedance response analysis, measurement was performed using an impedance analyzer (available from Solartron Metrology) under conditions of a frequency of 20 kHz to 10 mHz and a voltage amplitude of 10 mV. An intersection between a 45° straight line in a high frequency region and a vertical line in a low frequency region on a Cole-Cole plot was used to determine an ionic resistance $R_{ion}$ for the active material layer of the negative electrode sheet. The tortuosity factor was calculated from Equation (5) described below, wherein S represents the area of the negative electrode sheet, L represents the thickness of the active material layer of the negative electrode sheet, $\sigma$ represents the electrical conductivity of the electrolytic liquid, and $\varepsilon$ represents the porosity of the active material layer.

$$\text{Tortuosity factor} = R_{ion} \times (\varepsilon/2 \times L) \times (\sigma \times S) \ (5)$$

The results are shown in "Tortuosity factor" in Table 2.

[Table 1]

[Table 1]

Table 1

| | Heating temperature (°C) | Amorphous carbonaceous substance content (y) (mass%) | Particle size | | | Specific surface area (m²/g) | True density (g/cm³) | DBP oil absorption amount (mL/100 g) | Total pore volume (mL/g) | y/x | Cumulative pore volume | | | Raman R value (-) |
|---|---|---|---|---|---|---|---|---|---|---|---|---|---|---|
| | | | $d_{10}$ (μm) | $d_{50}$ (x) (μm) | $d_{90}$ (μm) | | | | | | 3000 nm or less (mL/g) | 1000 nm or less (mL/g) | 10 nm to 50 nm (mL/g) | |
| Example 1-1 | 1300 | 6.5 | 5.2 | 7.8 | 12.3 | 4.1 | 2.24 | 45.3 | 0.53 | 0.83 | 0.46 | 0.12 | 0.0064 | 0.44 |
| Comparative Example 1-1 | 1000 | 6.5 | 5.1 | 7.8 | 12.5 | 4.3 | 2.22 | 47.3 | 0.59 | 0.83 | 0.50 | 0.12 | 0.0071 | 0.53 |
| Example 1-2 | 1300 | 9.0 | 5.2 | 8.1 | 13.3 | 3.4 | 2.21 | 44.5 | 0.57 | 1.11 | 0.47 | 0.11 | 0.0041 | 0.49 |
| Comparative Example 1-2 | 1000 | 9.0 | 5.2 | 8.1 | 13.5 | 3.7 | 2.20 | 47.3 | 0.59 | 1.11 | 0.48 | 0.11 | 0.0045 | 0.61 |

[Table 2]

[Table 2]

Table 2

| | Irreversible capacity (mAh/g) | Initial efficiency (%) | | Storage recovery rate (%) after 2 weeks | Storage recovery rate (%) after 4 weeks | Input/output characteristics (Ω) | | Tortuosity factor (-) |
|---|---|---|---|---|---|---|---|---|
| Example 2-1 | 41 | 89.7 | Example 3-1 | 94.6 | 92.0 | 0.085 | Example 4-1 | 4 |
| Comparative Example 2-1 | 48 | 88.4 | Comparative Example 3-1 | 92.3 | 89.1 | - | Comparative Example 4-1 | 4.2 |
| Example 2-2 | 39 | 90.1 | Example 3-2 | 95.3 | 93.2 | 0.081 | Example 4-2 | 3.6 |
| Comparative Example 2-2 | 48 | 88.2 | Comparative Example 3-2 | 91.9 | 89.3 | - | Comparative Example 4-2 | 4.4 |

As shown in the above results, in the carbon materials of Examples 1-1 and 1-2, the content of the amorphous carbonaceous substance and the heating temperature were adjusted so that the volume-based average particle size, the true density, and the Raman R value fell within the predetermined ranges. As a result, in Examples 2-1 and 2-2 in which these carbon materials were used as the negative electrode material, the irreversible capacity was suppressed, and as shown in Examples 3-1 and 3-2, the initial efficiency and the long-term storage recovery rate of the negative electrode were excellent.

In contrast, the carbon materials of Comparative Examples 1-1 and 1-2 had high Raman R values, and in Comparative Examples 2-1 and 2-2 in which these carbon materials were used as the negative electrode material, irreversible capacities were increased. As shown in Comparative Examples 3-1 and 3-2, the initial efficiency and the long-term storage recovery rate of the negative electrode were both poor. The results indicated that the carbon material according to the present embodiment was a negative electrode material having high lithium ion diffusibility from the viewpoint of the tortuosity factor.

The present invention has been described in detail with reference to specific embodiments. However, it would be clear to a person skilled in the art that various changes and modifications can be made without departing from the spirit and scope of the present invention. The present application is based on the Japanese patent application (JP 2023-038965) filed on March 13, 2023, the content of which is incorporated herein by reference.

Industrial Applicability

When the carbon material according to the present embodiment is used as a negative electrode active material of a secondary battery, it is possible to achieve good initial efficiency and long-term storage recovery rate without increasing the irreversible capacity. Therefore, the carbon material can be suitably used as an active material of a negative electrode of a secondary battery, can be more suitably used as an active material of a negative electrode of a non-aqueous secondary battery, and can be particularly suitably used as an active material of a negative electrode of a non-aqueous lithium-ion secondary battery.

**Claims**

1. A carbon material having a volume-based average particle size $d_{50}$ of 9 μm or less, a true density of 2.25 g/cm$^3$ or less, and a Raman R value of 0.50 or less, the Raman R value being represented by an equation described below:

   Raman R value = (intensity $I_B$ of peak $P_H$ near 1360 cm$^{-1}$ in Raman spectrum analysis)/(intensity $I_A$ of peak $P_A$ near 1580 cm$^{-1}$ in Raman spectrum analysis).

2. The carbon material according to claim 1, wherein the volume-based average particle size $d_{50}$ is 5 μm or more.

3. The carbon material according to claim 1, wherein the carbon material has a volume-based particle size $d_{90}$ of 15 μm or less, the volume-based particle size $d_{90}$ corresponding to cumulative 90% from a small particle side.

4. The carbon material according to claim 1, wherein the carbon material has a volume-based particle size $d_{10}$ of 6 μm or less, the volume-based particle size $d_{10}$ corresponding to cumulative 10% from a small particle side.

5. The carbon material according to claim 1, wherein the Raman R value is 0.20 or more.

6. The carbon material according to claim 1, wherein

   the carbon material comprises an amorphous carbonaceous substance; and
   a ratio of a content (mass%) of the amorphous carbonaceous substance in the carbon material to the volume-based average particle size $d_{50}$ (μm) is 0.5 or more and 2.0 or less.

7. The carbon material according to claim 1, wherein the carbon material has a DBP oil absorption amount of 47 mL/100 g or less.

8. The carbon material according to claim 1, wherein the carbon material has a total pore volume of 0.58 mL/g or less.

9. The carbon material according to claim 1, wherein the carbon material has a cumulative pore volume of pores of 3000 nm or less of 0.3 mL/g or more.

10. The carbon material according to claim 1, wherein the carbon material has a cumulative pore volume of pores of 1000 nm or less of 0.1 mL/g or more.

11. The carbon material according to claim 1, wherein the carbon material has a cumulative pore volume of pores of from 10 nm to 50 nm of 0.01 mL/g or less.

12. A negative electrode comprising the carbon material described in any one of claims 1 to 11.

13. A non-aqueous secondary battery comprising a positive electrode and a negative electrode, the electrodes being capable of storing and releasing lithium ions, and an electrolyte, wherein
the negative electrode includes the carbon material described in any one of claims 1 to 11.

14. A method for producing a carbon material, the method comprising:

mixing natural graphite having a volume-based average particle size $d_{50}$ of 9 $\mu$m or less and an amorphous carbonaceous substance precursor; and
heating the mixture until a Raman R value represented by an equation described below reaches 0.50 or less, to produce a carbon material having a content of an amorphous carbonaceous substance in the carbon material of from 4 mass% to 15 mass%:

Raman R value = (intensity $I_B$ of peak $P_H$ near 1360 cm$^{-1}$ in Raman spectrum analysis)/(intensity $I_A$ of peak $P_A$ near 1580 cm$^{-1}$ in Raman spectrum analysis).

15. The method for producing a carbon material according to claim 14, wherein a temperature of the heating is 1200°C or higher.

16. The method for producing a carbon material according to claim 14, wherein, after the carbon material is heated, the produced carbon material is disintegrated and classified.

17. A method for producing a negative electrode, the method comprising applying the carbon material described in any one of claims 1 to 11 onto a current collector.

18. A method for producing a secondary battery including a positive electrode, a negative electrode, and an electrolyte, wherein
the negative electrode is produced by the method described in claim 17.

## INTERNATIONAL SEARCH REPORT

| International application No. |
| --- |
| **PCT/JP2024/009862** |

| A. | CLASSIFICATION OF SUBJECT MATTER |
| --- | --- |

*C01B 32/21*(2017.01)i; *H01M 4/133*(2010.01)i; *H01M 4/587*(2010.01)i; *H01M 4/1393*(2010.01)i
FI:  C01B32/21; H01M4/587; H01M4/1393; H01M4/133

According to International Patent Classification (IPC) or to both national classification and IPC

| B. | FIELDS SEARCHED |
| --- | --- |

Minimum documentation searched (classification system followed by classification symbols)

C01B32/21; H01M4/133; H01M4/587; H01M4/1393

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-189319 A (MITSUBISHI CHEMICAL CORPORATION) 04 November 2016 (2016-11-04) <br> paragraphs [0012], [0229], example 6, table 1 | 1-13 |
| A | paragraphs [0012], [0229], example 6, table 1 | 14-18 |
| X | JP 2012-094505 A (MITSUBISHI CHEMICAL CORPORATION) 17 May 2012 (2012-05-17) <br> claims 5-6, comparative example 5, table 1 | 1, 2, 5, 12, 13 |
| A | claims 5-6, comparative example 5, table 1 | 3, 4, 6-11, 14-18 |
| A | WO 2020/110943 A1 (SHOWA DENKO K.K.) 04 June 2020 (2020-06-04) <br> paragraphs [0043], [0083]-[0084], claim 5 | 1-18 |
| A | JP 2021-180186 A (JFE CHEMICAL CORPORATION) 18 November 2021 (2021-11-18) <br> paragraphs [0031]-[0054] | 1-18 |

☐ Further documents are listed in the continuation of Box C.   ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **02 May 2024** | **21 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
**Information on patent family members**

International application No.

**PCT/JP2024/009862**

| Patent document cited in search report | | | Publication date (day/month/year) | Patent family member(s) | | | Publication date (day/month/year) |
|---|---|---|---|---|---|---|---|
| JP | 2016-189319 | A | 04 November 2016 | US | 2017/0187041 | A1 | |
| | | | | example K1, table 1K | | | |
| | | | | WO | 2016/006617 | A1 | |
| | | | | example K1, table 1K | | | |
| | | | | KR | 10-2017-0030580 | A | |
| | | | | CN | 106663808 | A | |
| JP | 2012-094505 | A | 17 May 2012 | US | 2013/0224598 | A1 | |
| | | | | paragraph [0017], comparative example 5, table 1 | | | |
| | | | | WO | 2012/043666 | A1 | |
| | | | | paragraph [0016], comparative example 5, table 1 | | | |
| | | | | CN | 103140969 | A | |
| | | | | KR | 10-2013-0113439 | A | |
| WO | 2020/110943 | A1 | 04 June 2020 | (Family: none) | | | |
| JP | 2021-180186 | A | 18 November 2021 | US | 2022/0127146 | A1 | |
| | | | | paragraphs [0058]-[0091] | | | |
| | | | | WO | 2021/166359 | A1 | |
| | | | | paragraphs [0032]-[0054] | | | |
| | | | | CN | 112930610 | A | |
| | | | | KR | 10-2021-0106979 | A | |
| | | | | TW | 202133481 | A | |

**EP 4 682 103 A1**